# EUROPEAN PATENT APPLICATION

(11) **EP 4 769 880 A1**
(43) Date of publication of application: **01.07.2026**
(21) Application number: 25186871.7
(22) Date of filing: 02.07.2025
(51) Int. Cl.: H02J 7/00, H02J 7/34, H02J 1/10

(54) **ENERGY STORAGE DEVICE**

(30) Priority: 24.12.2024 TW 113150356
(71) Applicant: APh ePower Co., Ltd., Kaohsiung City 821 (TW)
(72) Inventor: SU, Hsiu-Hsien, Kaohsiung City 821 (TW); LIN, Yi Jun, Kaohsiung City 821 (TW); HUANG, Kuan-Chieh, Kaohsiung City 821 (TW)
(74) Representative: Becker, Eberhard

(57) **Abstract**

Provided is an energy storage device (100, 200, 300, 400). The energy storage device (100, 200, 300, 400) includes a power bus (110), a first battery module (120_1), a second battery module (120_2), a first charging and discharging circuit (130_1), a second charging and discharging circuit (130_2), and a control circuit (140). The first charging and discharging circuit (130_1) receives power located on the power bus (110) and a first battery state of the first battery module (120_1) to provide a first sensing signal (SS1). The second charging and discharging circuit (130_2) receives the power located on the power bus (110) and a second battery state of the second battery module (120_2) to provide a second sensing signal (SS2). The control circuit (140) controls the first charging and discharging circuit (130_1) and the second charging and discharging circuit (130_2).

## Description

### BACKGROUND

### Technical Field

The disclosure relates to an energy storage device, and in particular relates to an energy storage device which includes two battery modules.

### Related Art

Based on the need for energy conservation, current energy storage devices may utilize a single battery module to store power. However, a single battery module provides limited manners of operation. For example, current energy storage devices may only charge the battery module or power a load utilizing a battery power of the battery module.

Therefore, how to provide an energy storage device which has a diverse power transmission operation is one of the research focuses for those skilled in the art.

### SUMMARY

The disclosure provides an energy storage device, which has a diverse power transmission operation.

In an embodiment of the disclosure, the energy storage device includes a power bus, a first battery module, a second battery module, a first charging and discharging circuit, a second charging and discharging circuit, and a control circuit. The first charging and discharging circuit is coupled to the first battery module and the power bus. The first charging and discharging circuit is configured to receive power located on the power bus and a first battery state of the first battery module to provide a first sensing signal. The second charging and discharging circuit is coupled to the second battery module and the power bus. The second charging and discharging circuit is configured to receive the power located on the power bus and a second battery state of the second battery module to provide a second sensing signal. The control circuit is communicatively connected to the first charging and discharging circuit and the second charging and discharging circuit. The control circuit is configured to control the first charging and discharging circuit to execute a first power transmission operation on the first battery module and control the second charging and discharging circuit to execute a second power transmission operation on the second battery module according to the first sensing signal and the second sensing signal.

Based on the above, the control circuit controls the first charging and discharging circuit to execute the first power transmission operation on the first battery module and controls the second charging and discharging circuit to execute the second power transmission operation on the second battery module according to the first sensing signal and the second sensing signal. In this way, the energy storage device can provide a diverse power transmission operation.

### BRIEF DESCRIPTION OF THE DRAWINGS

FIG. 1 is a schematic diagram of an energy storage device according to an embodiment of the disclosure.
FIG. 2 is a schematic diagram of operation of an energy storage device according to an embodiment of the disclosure.
FIG. 3 is a schematic diagram of operation of an energy storage device according to an embodiment of the disclosure.
FIG. 4 is a schematic diagram of operation of an energy storage device according to an embodiment of the disclosure.
FIG. 5 is a schematic diagram of operation of an energy storage device according to an embodiment of the disclosure.
FIG. 6 is a schematic diagram of operation of an energy storage device according to an embodiment of the disclosure.
FIG. 7 is a schematic diagram of operation of an energy storage device according to an embodiment of the disclosure.
FIG. 8 is a schematic diagram of operation of an energy storage device according to an embodiment of the disclosure.
FIG. 9 is a schematic diagram of operation of an energy storage device according to an embodiment of the disclosure.
FIG. 10 is a schematic diagram of a first charging and discharging circuit according to an embodiment of the disclosure.

### DESCRIPTION OF THE EMBODIMENTS

Some embodiments of the disclosure are described in detail hereinafter with reference to the drawings. Reference numerals in the following description may be regarded as the same or similar elements when the same reference numerals appear in different drawings. These embodiments constitute only part of the disclosure and do not disclose all possible embodiments of the disclosure. Rather, these embodiments are only examples of the claims of the disclosure.

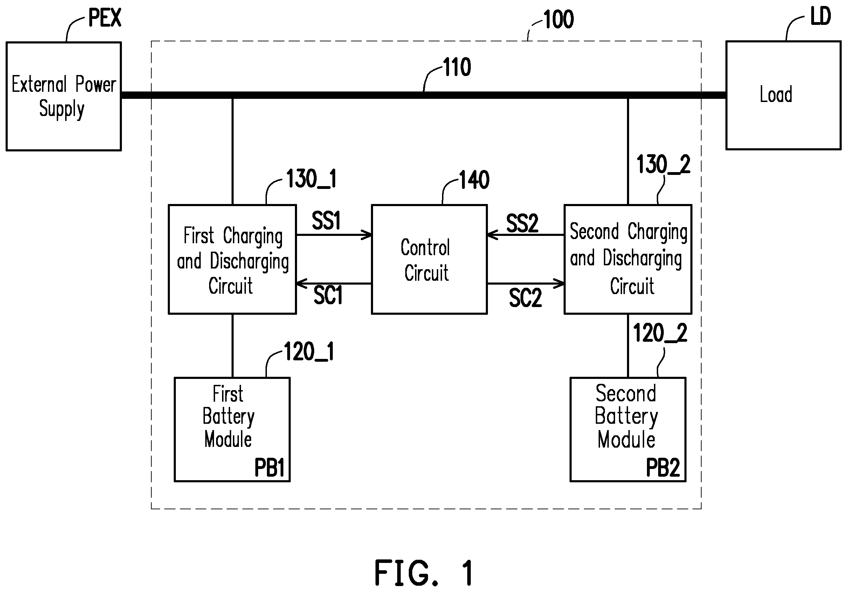

Please refer to FIG. 1. FIG. 1 is a schematic diagram of an energy storage device according to an embodiment of the disclosure. In the embodiment, an energy storage device 100 includes a power bus 110, a first battery module 120_1, a second battery module 120_2, a first charging and discharging circuit 130_1, a second charging and discharging circuit 130_2, and a control circuit 140. The first charging and discharging circuit 130_1 is coupled to the first battery module 120_1 and the power bus 110. The first charging and discharging circuit 130_1 receives power located on the power bus 110 and a first battery state of the first battery module 120_1 to provide a first sensing signal SS1. The second charging and discharging circuit 130_2 is coupled to the second battery module 120_2 and the power bus 110. The second charging and discharging circuit 130_2 receives the power located on the power bus 110 and a second battery state of the second battery module 120_2 to provide a second sensing signal SS2.

In the embodiment, the control circuit 140 is communicatively connected to the first charging and discharging circuit 130_1 and the second charging and discharging circuit 130_2. The control circuit 140 controls the first charging and discharging circuit 130_1 to execute a first power transmission operation on the first battery module 120_1 and controls the second charging and discharging circuit 130_2 to execute a second power transmission operation on the second battery module 120_2 according to the first sensing signal SS1 and the second sensing signal SS2.

For example, the first power transmission operation may be utilizing a battery power PB1 of the first battery module 120_1 to power the power bus 110 (or called, a discharging operation of the first battery module 120_1). The first power transmission operation may be utilizing the power located on the power bus 110 to charge the first battery module 120_1 (or called, a charging operation of the first battery module 120_1). The second power transmission operation may be utilizing a battery power PB2 of the second battery module 120_2 to power the power bus 110 (or called, a discharging operation of the second battery module 120_2). The second power transmission operation may be utilizing the power located on the power bus 110 to charge the second battery module 120_2 (or called, a charging operation of the second battery module 120_2). The first power transmission operation and the second power transmission operation may be performed at the same time or performed at different times.

It is worth mentioning here that the control circuit 140 controls the first charging and discharging circuit 130_1 to execute the first power transmission operation on the first battery module 120_1, and controls the second charging and discharging circuit 130_2 to execute the second power transmission operation on the second battery module 120_2. In this way, the energy storage device 100 can provide a diverse power transmission operation.

In the embodiment, the characteristics of the first battery module 120_1 are different from the characteristics of the second battery module 120_2. For example, a charging and discharging rate (C-rate) of the first battery module 120_1 is higher than a charging and discharging rate of the second battery module 120_2. An energy density of the second battery module 120_2 is higher than an energy density of the first battery module 120_1. For example, the first battery module 120_1 may be any type of aluminum-ion battery. The second battery module 120_2 may be any type of lithium-ion battery, but the disclosure is not limited thereto. In some embodiments, the characteristics of the first battery module 120_1 may be similar to the characteristics of the second battery module 120_2.

In the embodiment, the control circuit 140 performs a wired or wireless communication with the first charging and discharging circuit 130_1 and the second charging and discharging circuit 130_2. The control circuit 140 determines a state of the first battery module 120_1 and a state of the second battery module 120_2 according to the first sensing signal SS1 and the second sensing signal SS2. The control circuit 140 determines whether the power bus 110 has received an external power PEX according to at least one of the first sensing signal SS1 and the second sensing signal SS2. The control circuit 140 provides control signals SC1 and SC2 according to the state of the first battery module 120_1, the state of the second battery module 120_2, and the external power PEX. The control circuit 140 utilizes the control signal SC1 to control the first charging and discharging circuit 130_1 to execute the first power transmission operation on the first battery module 120_1, and utilizes the control signal SC2 to control the second charging and discharging circuit 130_2 to execute the second power transmission operation on the second battery module 120_2.

In the embodiment, a first end of the power bus 110 may receive the external power PEX. A second end of the power bus 110 may be connected to a load LD. The load LD may be any device or electric vehicle that receives power. The foregoing device may be a household appliance or electronic device (such as a smartphone, laptop, tablet, or personal computer). The foregoing electric vehicle may be an electric motorcycle, electric wheelchair, or electric car. In some embodiments, the energy storage device 100 may be adapted for camping or outdoor power supply.

In the embodiment, the control circuit 140 is, for example, a central processing unit (CPU), or other programmable general-purpose or special-purpose microprocessor, digital signal processor (DSP), programmable controller, application specific integrated circuits (ASIC), programmable logic device (PLD), or other similar devices or a combination of the devices.

In the embodiment, the power bus 110 is, for example, a direct current power bus.

In the embodiment, the external power PEX may be a direct current power converted from an alternating current power from utility power or renewable energy grid, but the disclosure is not limited to the manner or source of generation of the external power PEX.

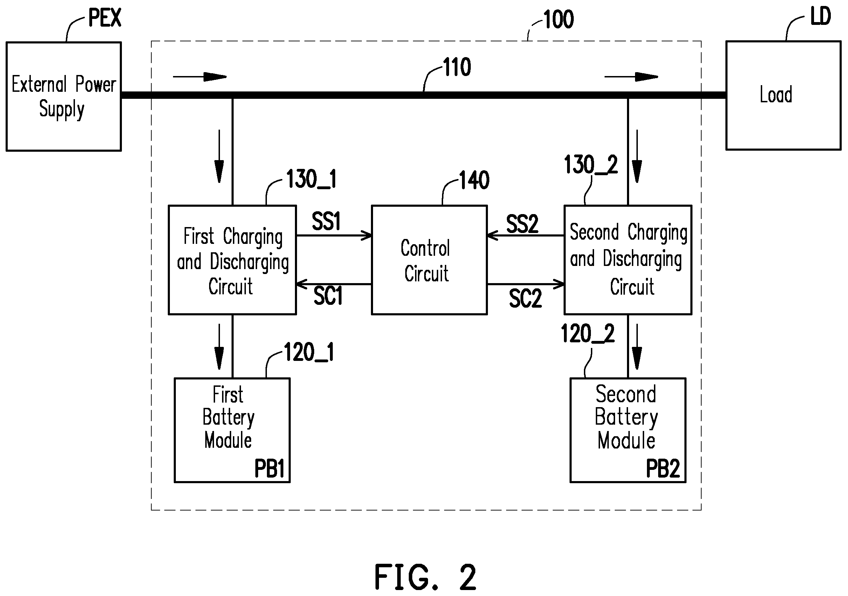

Please refer to FIG. 2. FIG. 2 is a schematic diagram of operation of an energy storage device according to an embodiment of the disclosure. In the embodiment, the control circuit 140 determines whether the power bus 110 has received the external power PEX according to at least one of the first sensing signal SS1 and the second sensing signal SS2. When the power bus 110 is determined to have received the external power PEX, the control circuit 140 controls the first charging and discharging circuit 130_1 and the second charging and discharging circuit 130_2. Therefore, the first charging and discharging circuit 130_1 utilizes the external power PEX to charge the first battery module 120_1. The second charging and discharging circuit 130_2 utilizes the external power PEX to charge the second battery module 120_2. In addition, the power bus 110 transmits the external power PEX to the load LD.

For example, a charging and discharging rate of the first battery module 120_1 is higher than a charging and discharging rate of the second battery module 120_2. An energy density of the second battery module 120_2 is higher than an energy density of the first battery module 120_1. Therefore, compared to the second battery module 120_2, the first battery module 120_1 may be prioritized to enter a fully charged state.

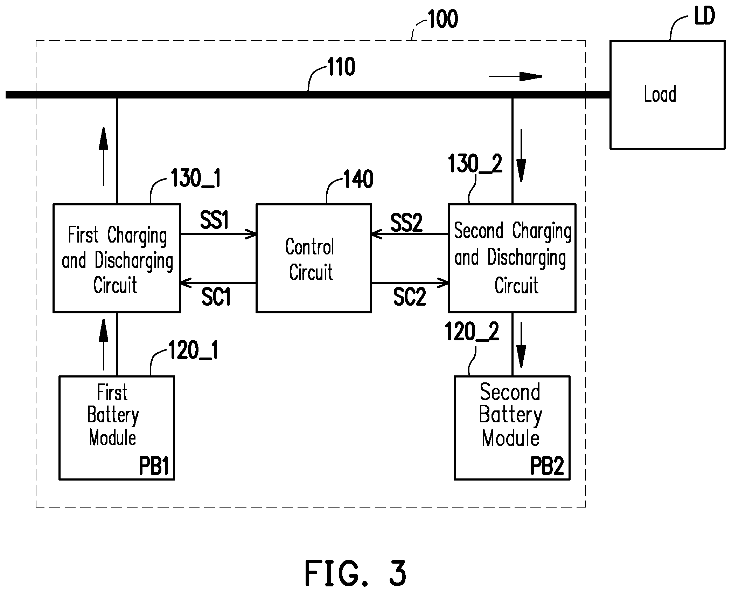

Please refer to FIG. 3. FIG. 3 is a schematic diagram of operation of an energy storage device according to an embodiment of the disclosure. In the embodiment, a charging and discharging rate of the first battery module 120_1 is higher than a charging and discharging rate of the second battery module 120_2. An energy density of the second battery module 120_2 is higher than an energy density of the first battery module 120_1. When the power bus 110 has not received the external power PEX, the first charging and discharging circuit 130_1 is controlled to prioritize utilizing the battery power PB1 of the first battery module 120_1 to power the power bus 110. Therefore, the energy storage device 100 prioritizes utilizing the battery power PB1 of the first battery module 120_1 with the high charging and discharging rate to power the load LD and to charge the second battery module 120_2.

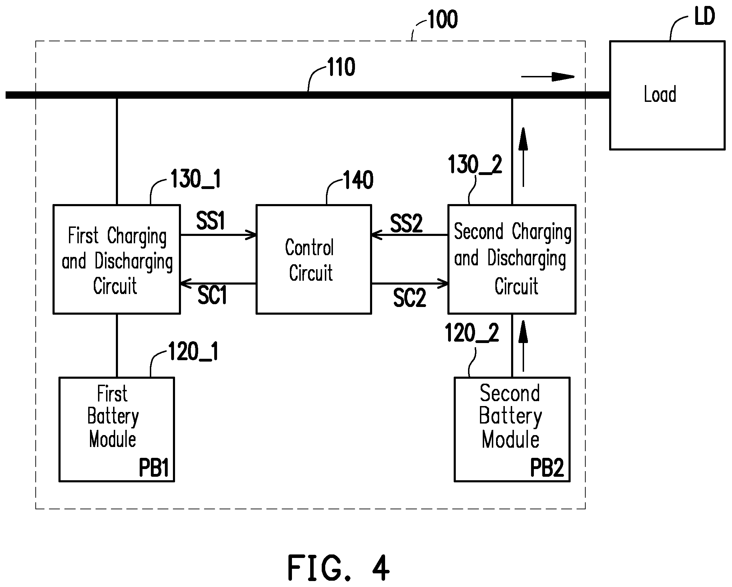

Please refer to FIG. 4. FIG. 4 is a schematic diagram of operation of an energy storage device according to an embodiment of the disclosure. In the embodiment, continuing with the operation in FIG. 3, the control circuit 140 may determine the state of the first battery module 120_1 according to the first sensing signal SS1. When the power bus 110 has not received the external power PEX and an energy of the first battery module 120_1 is insufficient, the second charging and discharging circuit 130_2 is controlled to utilize the battery power PB2 of the second battery module 120_2 to power the power bus 110. Therefore, when the energy of the first battery module 120_1 is insufficient, the energy storage device 100 may utilize the battery power PB2 of the second battery module 120_2 to power the load LD.

It should be noted that the energy density of the second battery module 120_2 is higher than the energy density of the first battery module 120_1. A discharging current of the second battery module 120_2 is limited. Therefore, the second battery module 120_2 may have a longer discharging time. When the power bus 110 has not received the external power PEX, a usage time of the load LD may be extended.

It is worth mentioning that, in the embodiments of FIG. 3 and FIG. 4, the energy storage device 100 prioritizes utilizing the battery power PB1 of the first battery module 120_1 with the high charging and discharging rate to power the load LD and to charge the second battery module 120_2. Subsequently, when the energy of the first battery module 120_1 is insufficient, the second battery module 120_2 with the high energy density provides a long-term power supply. Therefore, the energy storage device 100 makes good use of the different advantages of the first battery module 120_1 and the second battery module 120_2 to provide efficient power transmission and allow the load LD to have sufficient endurance capacity.

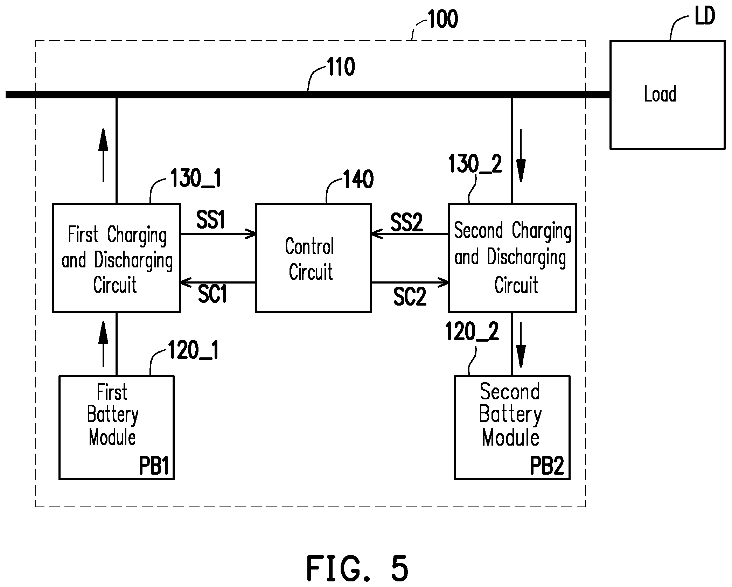

Please refer to FIG. 5. FIG. 5 is a schematic diagram of operation of an energy storage device according to an embodiment of the disclosure. In the embodiment, when the load LD coupled to the power bus 110 is in a standby state, and the power bus 110 has not received the external power PEX, the first charging and discharging circuit 130_1 and the second charging and discharging circuit 130_2 allow one of the first battery module 120_1 and the second battery module 120_2 to charge another one of the first battery module 120_1 and the second battery module 120_2.

For example, a charging and discharging rate of the first battery module 120_1 is higher than a charging and discharging rate of the second battery module 120_2. Therefore, when the load LD coupled to the power bus 110 is in the standby state, and the power bus 110 has not received the external power PEX, the battery power PB1 of the first battery module 120_1 is utilized to charge the second battery module 120_2.

In addition, for example, in a condition where the load LD is in the standby state, when an energy of a battery in the load LD is lower than 80%, the battery in the load LD may be allowed to fast charge. When the energy of the battery in the load LD is higher than or equal to 80%, a charging rate of the battery in the load LD is reduced. Therefore, when the energy of the battery in the load LD is lower than 80%, the energy storage device 100 may utilize the battery power PB1 of the first battery module 120_1 to charge the battery in the load LD. When the energy of the battery in the load LD is higher than or equal to 80%, the energy storage device 100 may utilize the battery power PB2 of the second battery module 120_2 to charge the battery in the load LD.

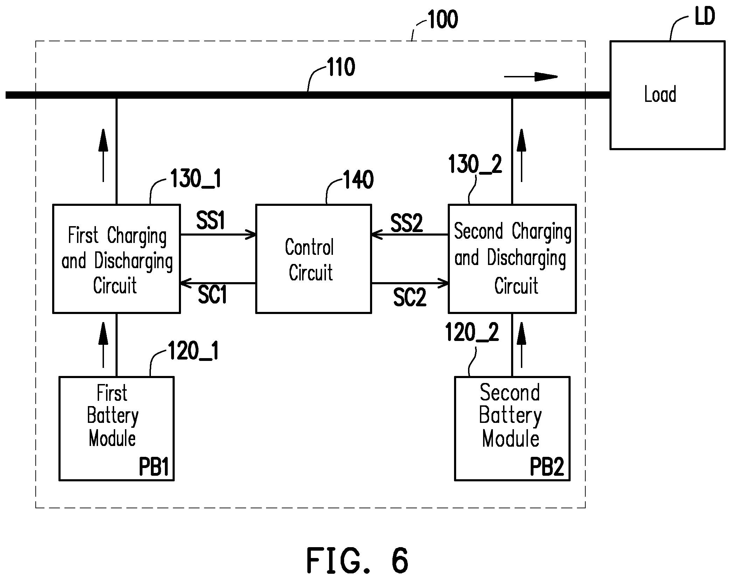

Please refer to FIG. 6. FIG. 6 is a schematic diagram of operation of an energy storage device according to an embodiment of the disclosure. In the embodiment, when the power bus 110 has not received the external power PEX, and the load LD needs high power (that is, a demand power of the load LD is greater than a set power), the first charging and discharging circuit 130_1 utilizes the battery power PB1 to power the load LD. In addition, the second charging and discharging circuit 130_2 also utilizes the battery power PB2 to power the load LD.

In the embodiment, the control circuit 140 may adjust an amount of power supply of the first battery module 120_1 and the second battery module 120_2 according to the energy of the first battery module 120_1 and the second battery module 120_2. For example, when the energy of the first battery module 120_1 is higher than the energy of the second battery module 120_2, an output power of the battery power PB1 is greater than an output power of the battery power PB2.

When the power bus 110 has not received the external power PEX, and the load LD does not need the high power (that is, the demand power of the load LD is less than or equal to the set power), the energy storage device 100 may utilize one of the battery powers PB1 and PB2 to power the load LD. The energy storage device 100 may power the load LD utilizing one of the operations in FIG. 3, FIG. 4 and FIG. 5.

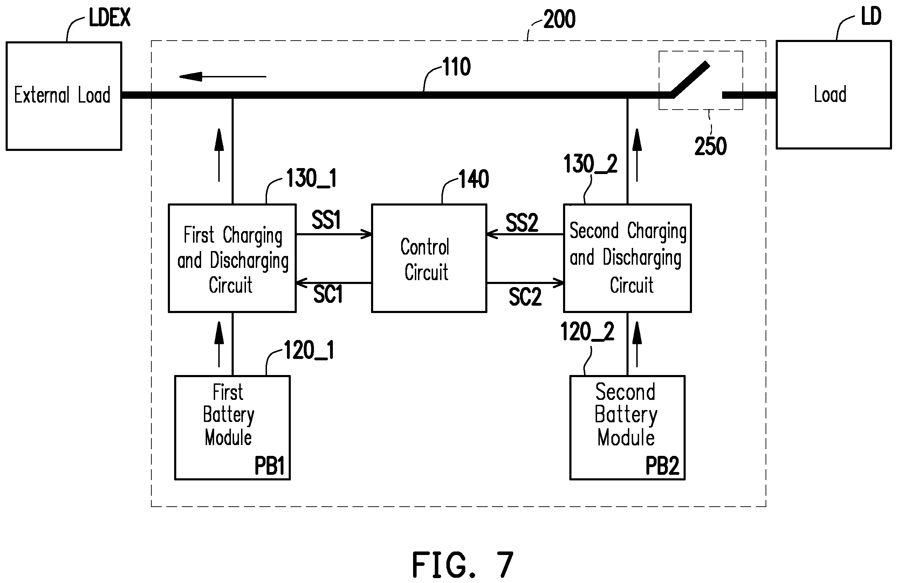

Please refer to FIG. 7. FIG. 7 is a schematic diagram of operation of an energy storage device according to an embodiment of the disclosure. In the embodiment, an energy storage device 200 includes the power bus 110, the first battery module 120_1, the second battery module 120_2, the first charging and discharging circuit 130_1, the second charging and discharging circuit 130_2, the control circuit 140, and a control switch 250. The operations of the power bus 110, the first battery module 120_1, the second battery module 120_2, the first charging and discharging circuit 130_1, the second charging and discharging circuit 130_2 and the control circuit 140 have been clearly described in the embodiments of FIG. 1 to FIG. 6, and will not be repeated here.

In the embodiment, the control switch 250 is coupled between the power bus 110 and the load LD. The control circuit 140 may control the turning-on or cutting-off of the control switch 250.

In the embodiment, when the power bus 110 is coupled to the load LD and an external load LDEX, the control circuit 140 cuts off the control switch 250. The first charging and discharging circuit 130_1 utilizes the battery power PB1 of the first battery module 120_1 to power the external load LDEX. In addition, the second charging and discharging circuit 130_2 also utilizes the battery power PB2 of the second battery module 120_2 to power the external load LDEX.

For example, the external load LDEX may be a battery of a vehicle. Therefore, when an energy of the battery of the vehicle is insufficient, the control circuit 140 cuts off the control switch 250 and performs emergency rescue charging on the battery of the vehicle. For example, a charging and discharging rate of the first battery module 120_1 is higher than a charging and discharging rate of the second battery module 120_2. Therefore, the first charging and discharging circuit 130_1 is controlled to prioritize utilizing the battery power PB1 of the first battery module 120_1 to power the external load LDEX. Subsequently, the second charging and discharging circuit 130_2 is controlled to utilize the battery power PB2 of the second battery module 120_2 to power the external load LDEX.

For example, the external load LDEX may be a charging pile. The energy storage device 200 may be disposed in an electric vehicle. The first charging and discharging circuit 130_1 is controlled to prioritize utilizing the battery power PB1 of the first battery module 120_1 to power the charging pile. Subsequently, the second charging and discharging circuit 130_2 is controlled to utilize the battery power PB2 of the second battery module 120_2 to power the charging pile. In other words, the external load LDEX may recover power, thereby increasing the economic benefits of the electric vehicle.

For example, the external load LDEX may be a battery of an electronic device. Therefore, when an energy of the battery of the electronic device is insufficient, the control circuit 140 cuts off the control switch 250 and performs fast charging on the battery of the electronic device. For example, a charging and discharging rate of the first battery module 120_1 is higher than a charging and discharging rate of the second battery module 120_2. Therefore, the first charging and discharging circuit 130_1 is controlled to prioritize utilizing the battery power PB1 of the first battery module 120_1 to power the external load LDEX. Subsequently, the second charging and discharging circuit 130_2 is controlled to utilize the battery power PB2 of the second battery module 120_2 to power the external load LDEX.

In addition, if power is to be supplied to the load LD, the control circuit 140 turns on the control switch 250.

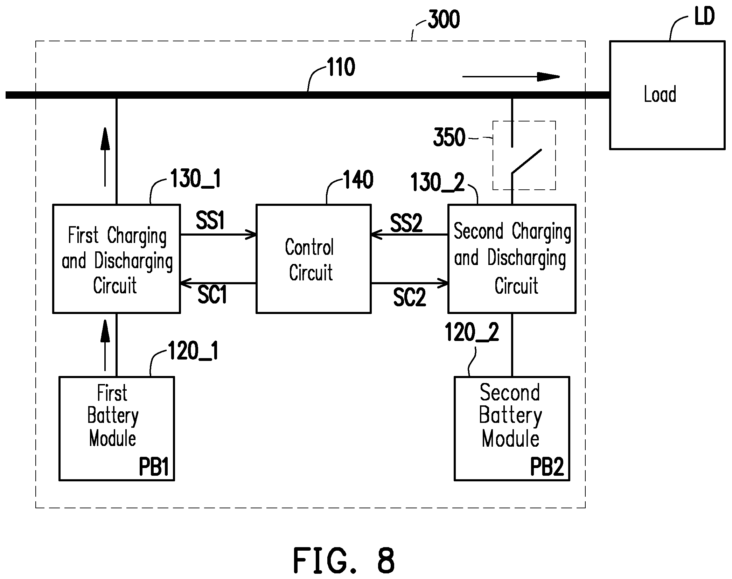

Please refer to FIG. 8. FIG. 8 is a schematic diagram of operation of an energy storage device according to an embodiment of the disclosure. In the embodiment, an energy storage device 300 includes the power bus 110, the first battery module 120_1, the second battery module 120_2, the first charging and discharging circuit 130_1, the second charging and discharging circuit 130_2, the control circuit 140, and a control switch 350. The operations of the power bus 110, the first battery module 120_1, the second battery module 120_2, the first charging and discharging circuit 130_1, the second charging and discharging circuit 130_2, and the control circuit 140 have been clearly described in the embodiments of FIG. 1 to FIG. 6, and will not be repeated here.

In the embodiment, the control switch 350 is coupled between the power bus 110 and the second battery module 120_2. The control circuit 140 may control the turning-on or cutting-off of the control switch 350.

For example, a charging and discharging rate of the first battery module 120_1 is higher than a charging and discharging rate of the second battery module 120_2. The load LD may be a smartphone, laptop, tablet, or personal computer. The load LD may enter an overclocking mode. In the overclocking mode, the control circuit 140 cuts off the control switch 350. The first charging and discharging circuit 130_1 is controlled to prioritize utilizing the battery power PB1 of the first battery module 120_1 to power the load LD. If the load LD enters a normal usage mode from the overclocking mode, the control circuit 140 turns on the control switch 350. The second charging and discharging circuit 130_2 is controlled to utilize the battery power PB2 of the second battery module 120_2 or a battery of the load LD to power the load LD.

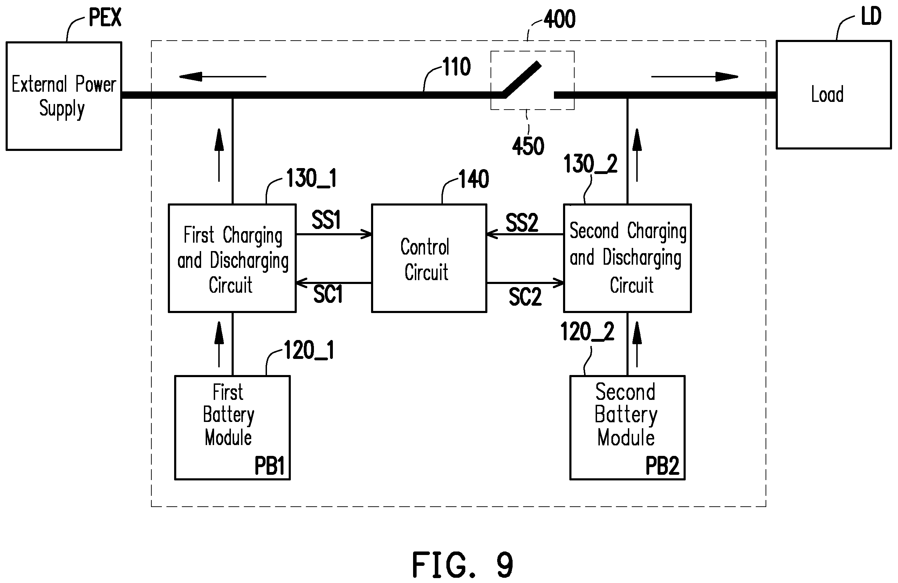

Please refer to FIG. 9. FIG. 9 is a schematic diagram of operation of an energy storage device according to an embodiment of the disclosure. In the embodiment, when the external power supply PEX experiences an overvoltage abnormality or an overcurrent abnormality, the control circuit 140 cuts off the power bus 110 to cut off a connection between the load LD and the external power supply PEX, and controls the first charging and discharging circuit 130_1 to store the power from the external power supply PEX to the first battery module 120_1.

In the embodiment, an energy storage device 400 includes the power bus 110, the first battery module 120_1, the second battery module 120_2, the first charging and discharging circuit 130_1, the second charging and discharging circuit 130_2, the control circuit 140, and a control switch 450. The operations of the power bus 110, the first battery module 120_1, the second battery module 120_2, the first charging and discharging circuit 130_1, the second charging and discharging circuit 130_2, and the control circuit 140 have been clearly described in the embodiments of FIG. 1 to FIG. 6, and will not be repeated here.

In the embodiment, a first end of the control switch 450 is coupled to a connection node between the first charging and discharging circuit 130_1 and the power bus 110. A second end of the control switch 450 is coupled to a connection node between the second charging and discharging circuit 130_2 and the power bus 110. When the external power supply PEX experiences the overvoltage abnormality or the overcurrent abnormality, the control circuit 140 cuts off the control switch 450. Therefore, when the external power supply PEX experiences the overvoltage abnormality or the overcurrent abnormality, the load LD may not receive an overvoltage or an overcurrent of the external power supply PEX. For example, the overvoltage or the overcurrent of the external power supply PEX may be caused by lightning strikes or electrostatic discharge (ESD). The first charging and discharging circuit 130_1 further stores the power from the external power supply PEX to the first battery module 120_1 with the high charging and discharging rate. In addition, when the external power supply PEX experiences the overvoltage abnormality or the overcurrent abnormality, the second charging and discharging circuit 130_2 utilizes the battery power PB2 to power the load LD.

From this, it is known that when the external power supply PEX experiences the overvoltage abnormality or the overcurrent abnormality, the control switch 450 is cut off. The load LD may not receive the overvoltage or the overcurrent of the external power supply PEX. The first battery module 120_1 is configured to absorb the overvoltage or the overcurrent of the external power supply PEX. In addition, the second charging and discharging circuit 130_2 utilizes the battery power PB2 to power the load LD. Therefore, the load LD may not be damaged by the overvoltage or the overcurrent of the external power supply PEX. The load LD may also operate normally based on the power supply from the battery power PB2.

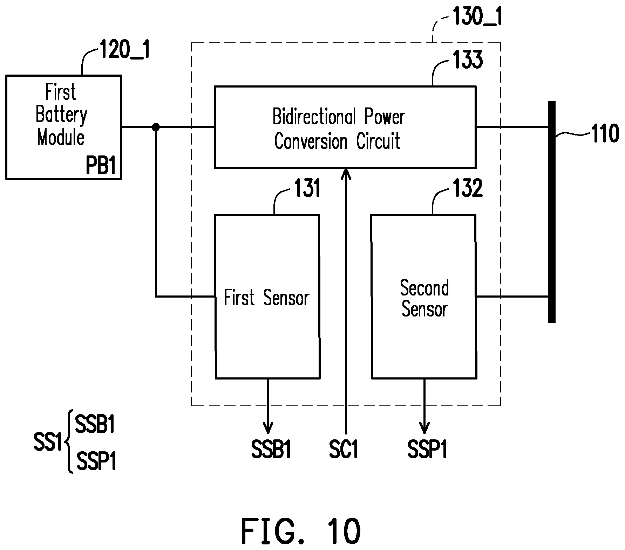

Please refer to FIG. 1 and FIG. 10. FIG. 10 is a schematic diagram of a first charging and discharging circuit according to an embodiment of the disclosure. In the embodiment, the first charging and discharging circuit 130_1 includes a first sensor 131, a second sensor 132, and a bidirectional power conversion circuit 133. The first sensor 131 is coupled to the first battery module 120_1 and the control circuit 140. The first sensor 131 senses a voltage value, a current value, and a temperature of the first battery module 120_1. The second sensor 132 is coupled to the power bus 110 and the control circuit 140. The second sensor 132 senses a voltage value and a current value located on the power bus 110. The bidirectional power conversion circuit 133 is coupled to the first battery module 120_1, the power bus 110, and the control circuit 140. The bidirectional power conversion circuit 133 utilizes the battery power PB1 of the first battery module 120_1 to power the power bus 110 in response to a first control of the control circuit 140, and utilizes the power located on the power bus 110 to charge the first battery module 120_1 in response to a second control of the control circuit 140.

In the embodiment, the first sensing signal SS1 includes sensing signals SSB1 and SSP1. The first sensor 131 senses the voltage value, the current value, and the temperature of the first battery module 120_1 to generate the sensing signal SSB1, and provides the sensing signal SSB1 to the control circuit 140. The second sensor 132 senses the voltage value and the current value located on the power bus 110 to generate the sensing signal SSP1, and provides the sensing signal SSP1 to the control circuit 140.

It should be noted that the first charging and discharging circuit 130_1 provides monitoring of a voltage value, a current value, and a temperature. Therefore, the usage safety of the energy storage device 100 may be enhanced.

In some embodiments, the first sensing signal SS1 includes the sensing signals SSB1 and SSP 1. The first sensor 131 senses at least one of the voltage value, the current value, and the temperature of the first battery module 120_1. The second sensor 132 senses at least one of the voltage value and the current value located on the power bus 110. For example, the first sensor 131 senses the voltage value and the current value of the first battery module 120_1 to generate the sensing signal SSB1. The second sensor 132 senses one of the voltage value and the current value located on the power bus 110 to generate the sensing signal SSP1.

In the embodiment, the bidirectional power conversion circuit 133 receives a control signal SC1. When the control signal SC1 has a first parameter, the bidirectional power conversion circuit 133 utilizes the battery power PB1 of the first battery module 120_1 to power the power bus 110. When the control signal SC1 has a second parameter, the bidirectional power conversion circuit 133 utilizes the power located on the power bus 110 to charge the first battery module 120_1. In the embodiment, the first parameter is different from the second parameter. For example, the first parameter and the second parameter are respectively different voltage values, logic values, current values, duty cycles, or digital code values.

In summary, the control circuit controls the first charging and discharging circuit to execute the first power transmission operation on the first battery module, and controls the second charging and discharging circuit to execute the second power transmission operation on the second battery module. In this way, the energy storage device can provide a diverse power transmission operation. Furthermore, in some embodiments, the charging and discharging rate of the first battery module is higher than the charging and discharging rate of the second battery module. The energy density of the second battery module is higher than the energy density of the first battery module. The energy storage device prioritizes utilizing the battery power of the first battery module with the high charging and discharging rate to power the load and to charge the second battery module. Subsequently, when the energy of the first battery module is insufficient, the second battery module with the high energy density provides a long-term power supply. Therefore, the energy storage device makes good use of the different advantages of the first battery module and the second battery module to provide efficient power transmission and allow the load to have adequate endurance capacity.

Although the disclosure has been disclosed in the above embodiments, the embodiments are not intended to limit the disclosure. Persons skilled in the art may make some changes and modifications without departing from the spirit and scope of the disclosure. Therefore, the protection scope of the disclosure shall be defined by the appended claims.

## Claims

1. An energy storage device (100, 200, 300, 400), comprising:
a power bus (110);
a first battery module (120_1);
a second battery module (120_2);
a first charging and discharging circuit (130_1), coupled to the first battery module (120_1) and the power bus (110), and configured to receive power located on the power bus (110) and a first battery state of the first battery module (120_1) to provide a first sensing signal (SS1);
a second charging and discharging circuit (130_2), coupled to the second battery module (120_2) and the power bus (110), and configured to receive the power located on the power bus (110) and a second battery state of the second battery module (120_2) to provide a second sensing signal (SS2); and
a control circuit (140), communicatively connected to the first charging and discharging circuit (130_1) and the second charging and discharging circuit (130_2), and configured to control the first charging and discharging circuit (130_1) to execute a first power transmission operation on the first battery module (120_1) and control the second charging and discharging circuit (130_2) to execute a second power transmission operation on the second battery module (120_2) according to the first sensing signal (SS1) and the second sensing signal (SS2).

2. The energy storage device (100, 200, 300, 400) according to claim 1, wherein the control circuit (140) determines whether the power bus (110) has received an external power supply (PEX) according to at least one of the first sensing signal (SS1) and the second sensing signal (SS2).

3. The energy storage device (100, 200, 300, 400) according to claim 2, wherein when the power bus (110) receives the external power supply (PEX):
the first charging and discharging circuit (130_1) utilizes the external power supply (PEX) to charge the first battery module (120_1), and
the second charging and discharging circuit (130_2) utilizes the external power supply (PEX) to charge the second battery module (120_2).

4. The energy storage device (100, 200, 300, 400) according to claim 2, wherein a charging and discharging rate of the first battery module (120_1) is higher than a charging and discharging rate of the second battery module (120_2).

5. The energy storage device (100, 200, 300, 400) according to claim 4, wherein an energy density of the second battery module (120_2) is higher than an energy density of the first battery module (120_1).

6. The energy storage device (100, 200, 300, 400) according to claim 4, wherein when the power bus (110) has not received the external power supply (PEX), the first charging and discharging circuit (130_1) prioritizes utilizing a first battery power of the first battery module (120_1) to power the power bus (110).

7. The energy storage device (100, 200, 300, 400) according to claim 6, wherein when an energy of the first battery module (120_1) is insufficient, the second charging and discharging circuit (130_2) utilizes a second battery power of the second battery module (120_2) to power the power bus (110).

8. The energy storage device (100, 200, 300, 400) according to claim 2, wherein when a load (LD) coupled to the power bus (110) is in a standby state, and the power bus (110) has not received the external power supply (PEX), the first charging and discharging circuit (130_1) and the second charging and discharging circuit (130_2) allow one of the first battery module (120_1) and the second battery module (120_2) to charge another one of the first battery module (120_1) and the second battery module (120_2).

9. The energy storage device (100, 200, 300, 400) according to claim 2, wherein when the power bus (110) has not received the external power supply (PEX), and a demand power of a load (LD) coupled to the power bus (110) is greater than a set power:
the first charging and discharging circuit (130_1) utilizes a first battery power of the first battery module (120_1) to power the load (LD), and
the second charging and discharging circuit (130_2) utilizes a second battery power of the second battery module (120_2) to power the load (LD).

10. The energy storage device (100, 200, 300, 400) according to claim 2, wherein when the power bus (110) is coupled between a load (LD) and an external load (LDEX):
the first charging and discharging circuit (130_1) utilizes a first battery power of the first battery module (120_1) to power the external power supply (PEX), and
the second charging and discharging circuit (130_2) utilizes a second battery power of the second battery module (120_2) to power the external power supply (PEX).

11. The energy storage device (100, 200, 300, 400) according to claim 10, further comprising:
a control switch (250, 350, 450), coupled between the load (LD) and the power bus (110),
wherein when the power bus (110) is coupled between the load (LD) and the external load (LDEX), the control circuit (140) cuts off the control switch (250, 350, 450).

12. The energy storage device (100, 200, 300, 400) according to claim 2, wherein when the power bus (110) is coupled to a load (LD), and the external power supply (PEX) experiences an overvoltage abnormality or an overcurrent abnormality, the control circuit (140) cuts off the power bus (110) to cut off a connection between the load (LD) and the external power supply (PEX), and controls the first charging and discharging circuit (130_1) to store power from the external power supply (PEX) to the first battery module (120_1).

13. The energy storage device (100, 200, 300, 400) according to claim 1, wherein the first charging and discharging circuit (130_1) comprises:
a first sensor (131), coupled to the first battery module (120_1) and the control circuit (140), and configured to sense at least one of a voltage value, a current value and a temperature of the first battery module (120_1); and
a second sensor (132), coupled to the power bus (110) and the control circuit (140), and configured to sense at least one of a voltage value and a current value located on the power bus (110).

14. The energy storage device (100, 200, 300, 400) according to claim 1, wherein the first charging and discharging circuit (130_1) comprises:
a bidirectional power conversion circuit (133), coupled to the first battery module (120_1), the power bus (110) and the control circuit (140), and configured to utilize a first battery power of the first battery module (120_1) to power the power bus (110) in response to a first control of the control circuit (140) and utilize the power located on the power bus (110) to charge the first battery module (120_1) in response to a second control of the control circuit (140).
